Europäisches Patentamt

European Patent Office

Office européen des brevets

(11) Publication number: **0 126 236**
**B1**

# EUROPEAN PATENT SPECIFICATION

(45) Date of publication of patent specification: **18.10.89**

(21) Application number: **84103130.5**

(22) Date of filing: **21.03.84**

(51) Int. Cl.⁴: **F 01 C 9/00, F 02 B 53/02, F 02 B 75/04**

(54) **New explosion-type engine.**

(30) Priority: **27.04.83 ES 521889**

(43) Date of publication of application:
**28.11.84 Bulletin 84/48**

(45) Publication of the grant of the patent:
**18.10.89 Bulletin 89/42**

(84) Designated Contracting States:
**AT BE CH DE FR GB IT LI LU NL SE**

(56) References cited:
**DE-C- 529 912**
**FR-A- 991 631**
**FR-A-1 158 362**
**US-A-4 104 995**

(73) Proprietor: **Aldaz, Ignacio Sarasua**
**Euzko Gudariak 29 - 1**
**Orio (Guipuzcoa) (ES)**

(73) Proprietor: **Industria Tecnica de la Bisagra, S.L.**
**Poligono Industrial Aranguren Bo Santiago**
**Aya (Guipùzcoa) (ES)**

(72) Inventor: **Aldaz, Ignacio Sarasua**
**Euzko Gudariak, 29 - 10**
**Orio (Guipúzcoa) (ES)**

(74) Representative: **Lorenz, Eduard et al**
**Rechtsanwälte Lorenz, Eduard - Seidler,**
**Bernhard Seidler, Margrit - Gossel, Hans-K.**
**Philipps, Ina, Dr. Widenmayerstrasse 23**
**D-8000 München 22 (DE)**

Courier Press, Leamington Spa, England.

## Description

The invention refers to an explosion type engine according to the head clause of claim 1.

The engine of the present invention pertains to the so-called rotary group by which is obtained a direct rotating motion, derived from fuel explosion, without the intervention of any transmission means.

The efforts of manufacturers of explosion engines for automobiles have been aimed at improving the features of the conventional engine with one or more cylinders, having obtained up till now very poor results due to the existing multiple technical limitations, which have hindered obtaining high efficiency levels in the fuel consumption/work performance ratio.

Precisely due to the low efficiency of the hitherto-known engines, the consumption curve thereof is computed so that it may reach its lowest reading at a determined number of revolutions for a specific load. In the case of its use in an autombile, this implies a serious drawback, since at low levels for instance during city motoring with frequent stops and starts, at low speed rating or even idling occurs a considerable increase in fuel expense, since the engine is operating in a zone far removed from the consumption curve's optimum point. Under these circumstances, there is no reciprocity between the amount of fuel consumed and the work performed.

An explosion type engine according to the head clause of claim 1 is already disclosed in DE—C—529 912. This preknown engine requires a relatively large engine size, has a considerable weight and needs complicated cooling and lubricating circuits, due to its functional principle. For preventing detrimental lurching occurring in conventional engines it is known from FR—A—1158 362 that each elbowed rod and its corresponding piston pivots with respect to the same pivot point allowing the piston to shift, following a directory curve parallel to the internal wall of the cylinders.

The explosion engine of the present invention has favorably rectified such drawbacks, and it has attained a considerable increase in efficiency in respect of the known engines, which results, likewise in power boosting, in a substantial reduction in engine size and a low fuel consumption. The reduction of the engine block size further conjoins reduction in its weight and a notable simplification at the cooling and lubricating circuits.

According to the present invention, the engine comprises at least one rotor supporting one or more pairs of cylinders, in which the explosion is produced. The aforesaid cylinders operate at a pressure superior to that of the atmosphere, of approximately constant value, and such that pressurized air intake may be carried out through a passage cut for this purpose in the wall of each cylinder. On the other hand, venting of exhaust gases is produced through passages likewise provided in the wall of each cylinder. Fuel intake is carried out—through appropriate known injectors.

The cylinders are circular cross sectionally and arched longitudinally. Each one of these has been provided with its corresponding piston, each piston being joined externally to an elbowed arm—or rod, at the free end of which is pivotably secured the interior rotor element of the engine. The piston motion forms an arch, the circumference of which has the same radius as that corresponding to the curvature of the associated cylinder, travelling therefore parallelly to the internal walls of the cylinder, since said piston-motion is carried out taking as its origin the fixation point of the elbowed arm.

From the arm or rod elbow of each piston starts an articulated connecting rod which, in regard to the operation in question, shall be joined at its opposite end or directly to a tiny crankshaft or to an appropriate central disc, jointly and eccentrically connected to a tiny crankshaft.

The cylinders are not fixed, but can pivot in respect of the same point similarly as the corresponding piston rod. The cylinder motion is controlled by the position adopted by a control element like a wedge, which actuates externally on the cylinder head. Consequently, by actuating properly on said wedge, the position of the cylinders can be modified and increase or reduce the volume of the explosion chamber thereof.

The movement of the pistons, by means of their associated connecting rods, incides as heretofore stated on a tiny crankshaft, either directly or by means of an eccentric disc. Said crankshaft is used to move, on the one hand, one or more turbines which are in charge of increasing in air pressure produced by mixture with the fuel in each cylinder and, on the other, to move the fuel injector pump, the lubricating oil pump, and the water or cooling air pump, or of any other element as may be necessary.

The rotor supporting the cylinders is likewise movable and rotates in the same direction as the aforesaid crankshaft, said rotor assigned to transmit the drive motion up to the corresponding load shaft. The cylinders are provided on both sides of said rotor, on two or more planes, so that, preferably, one common head will be used for each set of backed cylinders. In other embodiments, each cylinder may include a separate head.

In another embodiment of the invention, each cylinder may be provided with a pressurized air intake valve.

Additional objects and advantages of the present invention still become apparent as the following detailed description of the invention is read in conjunction with the accompanying drawings which illustrate the invention.

Brief description of the drawings

Figure 1 is a general schematic view of the object of the invention.

Figure 2 is an enlarged detail view, in side elevation, of an 8-cylinder engine according to the invention.

Figure 3 is a front elevation view, showing certain parts in section, of an 8-cylinder engine according to the embodiment shown in Fig. 2.

Figure 4 is a side elevational view of another embodiment of an 8-cylinder engine according to the invention.

Figure 5 illustrates the same embodiment shown in Fig. 2, with the cylinders devoid of the pressurized air intake valve.

Figure 6 is a detail view of the adaptation of the control wedge to the head of the cylinders.

Detailed description of the invention

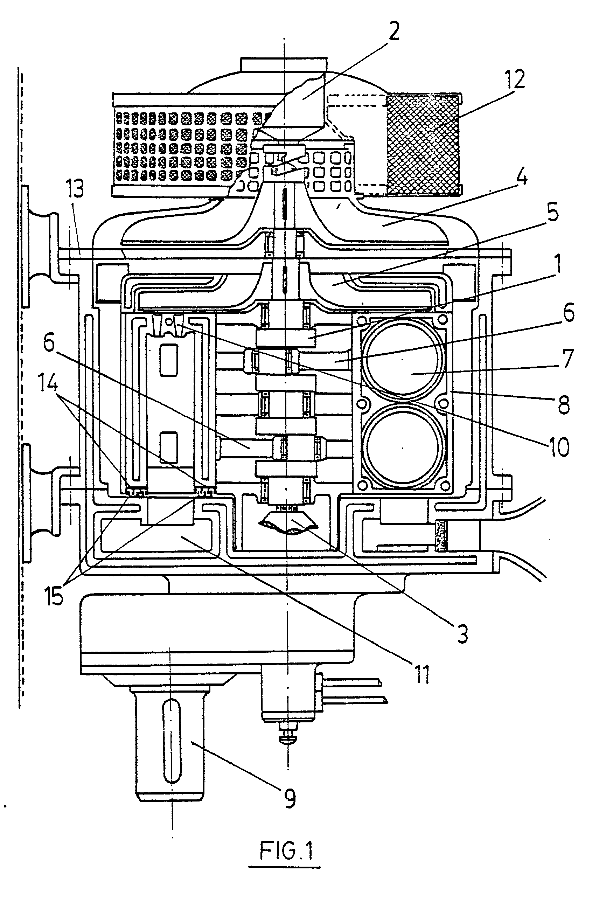

Referring initially to Fig. 1 of the drawings, shown therein is a schematized view of an embodiment of the engine of the invention. Shown in said figure is a tiny crankshaft 1, which at any of its ends is actuated by a starting engine 2 whereas at the opposite end it drives a set of pumps 3, formed by the injection, oil and water or air pumps. Secured to the crankshaft 1 are the turbines 4, 5 which introduce air to the interior of the engine, at a greater pressure than the atmosphere. Likewise, pressed on the crankshaft 1 and conveniently secured to its eccentric zones have been provided short connecting rods 6, which are jointed at their opposite end to the elbows of the arms or rods of the pistons. The cylinders 7 are shown arranged, by sets, on parallel planes and the blocks 8 of every two backed cylinders are adjustable in their positioning. The rotor set provides movement of a driving shaft 9 for load drive. On the other hand, the blocks of the cylinders have pressurized air free intake nozzles 10 and, outside the rotor set has been provided an exhaust collector chamber 11. The air drawn in the turbines 4 and 5 passes through the filter 12, and once pressure is increased, it goes into the rotor set, so that all the elements of said rotor set are thus subjected to the same superpressure. The rotor set is enclosed inside an appropriate external frame 13. Lastly, sealing elements 14 have been provided, secured to the rotor set and sealing elements 15 attached to the external frame, one facing the other and inserted one into the other like concentric combs, which keep the interior of the engine from coming in direct contact with the outside atmosphere and suppose a brake for the pressurized air, forcing it to travel through a longer path in its emergence outside. On the other hand, due to the existing superpressure inside the engine, it is thus ensured that the exhaust gases will not reach the interior of the engine through the said sealing elements.

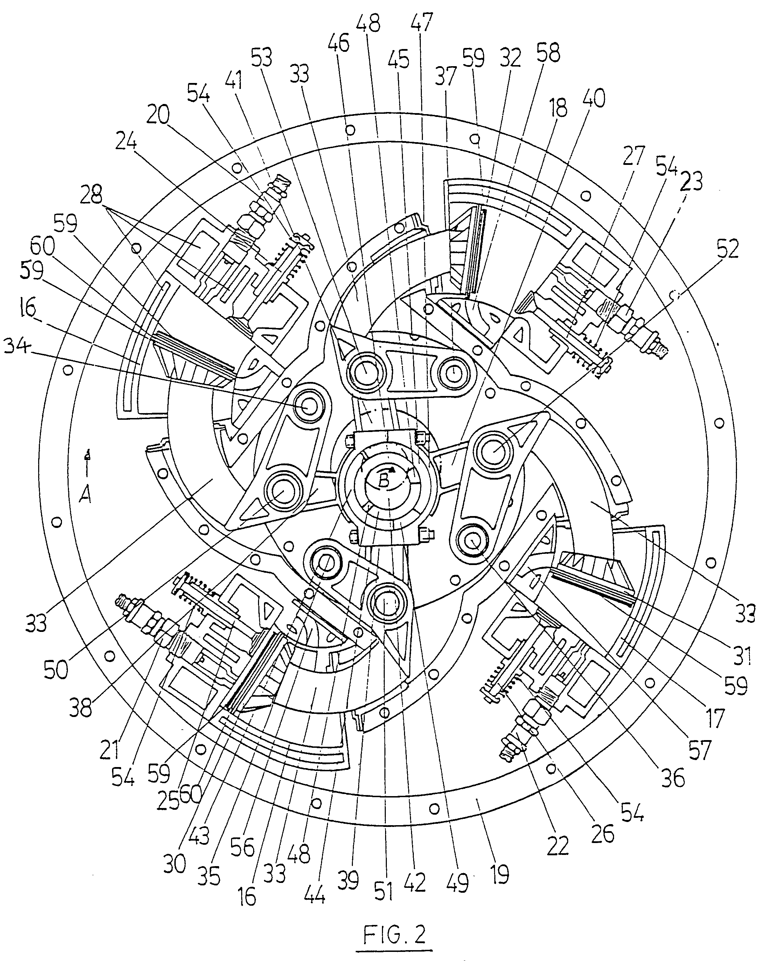

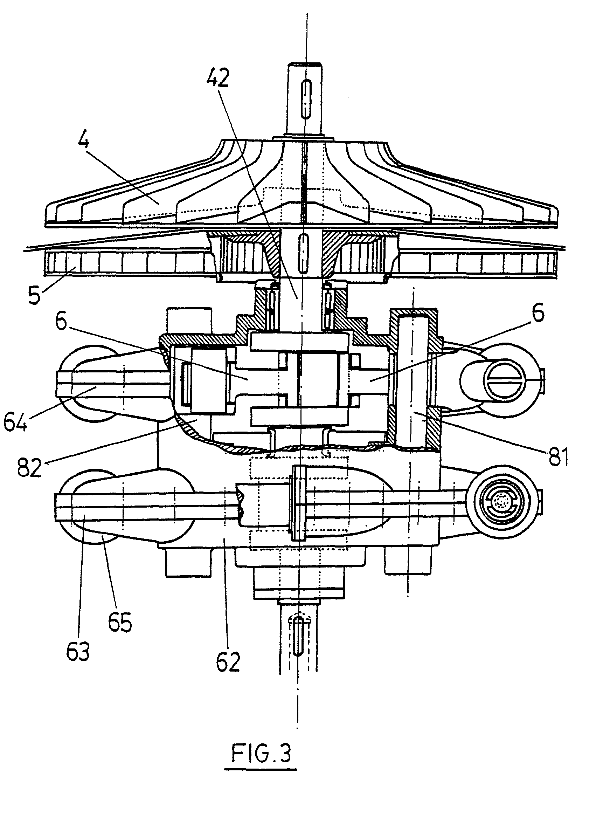

Upon describing the general view shown in Fig. 1 of the drawings, the embodiment depicted in Figs. 2 and 3 will be commented on. Referring, in the first place, to Fig. 2, shown therein are four cylinders 15 to 18 of an 8-cylinder engine, which are arranged on the same face of a rotor 19. The four remaining cylinders are similarly arranged on a second flat rotor parallel to the rotor 19. The cylinders of each rotor are housed on one same plane, and similarly as the known cylinders, each one of these is formed by a body and a head, but such that every two backed cylinders (one for each plane) have separate bodies but preferably share one same head. The body of all the cylinders is longitudinally arched and the cylinders are provided in the head area, respectively, with fuel injectors 20 to 23 and with pressurized air intake valves 24 to 27. On the other hand, both in the respective bodies and in the heads have been provided canalizations 28 for the coolant.

Since the operation of the cylinders of both flat rotors is the same, reference will be made hereinafter only to the four cylinders depicted in the figure.

Jointly with the cylinders 15 to 18, have been provided pistons 29 to 32, respectively, subsequently joined to elbowed rods 33 which are pivotably secured to the rotor 17 at points 34 to 37, respectively. The cylinders 15 to 18 are likewise pivotably connected to the same points 34 to 37 of the rotor, so that its rotation radius is identical to that of the aforementioned rods 33 of said pistons.

The part of each rod 33 comprised between each piston and the bending area is likewise arched with the same bending radius as that of the cylinders themselves. Jointed to said bending areas 50 to 53 of each rod 33 start short connecting rods 38 to 41, which at their opposite end are adapted to the eccentric zones of the tiny crankshaft 42. For their adaptation to the tiny crankshaft 42, the short connecting rods 38 to 41 will be provided at the corresponding end of semicylindrical extensions 43 to 46, two of which (for example, 44 and 46 one facing the other) will be directly coupled to the crankshaft 42 and the remaining two (for example, 43 and 45 likewise one facing the other), of greater diameter, will be bedded in the previous ones, the set keeping this position by means of an element 47 like a clamp.

The development of every two face-to-face extensions 43—45, 44—46, does not form a full cylinder, but rather on the contrary, there are open spaces 48, 49 therebetween which allow the pivoting motion of the aforesaid rods around the crankshaft 42.

In the case of the embodiment illustrated in this figure, each air intake valve 24 to 27 has a recall spring, which returns it to its locked position once the cylinders have been filled with pressurized air. On the other hand, the walls of the cylinders 15 to 18 have been provided with transversal passages 55 to 58 which constitute the exhaust gas outlet ducts. Lastly, the pistons 29 to 32 may be provided, optionally, with a front layer 59 of heat-resistant refractory material. The pistons include, moreover, adequate piston rings 60 between each piston and the wall of their corresponding cylinder.

As mentioned hereinabove, the cylinders 15 to 18 are jointed, with pivoting possibility, at the same articulation points 34 to 37 of the elbowed rods 33. Consequently, the position of said cylinders is variable, at will, this action being guided by means of elements 61 like wedges, which rest on the external rear face of the cylinders. The actuation of the elements 61 from the outside will be simultaneous for all the cylinders, and by the determination of their position, the volume of the explosion chamber of each cylinder will likewise be controlled.

Upon describing the various elements that make up the engine shown in Fig. 2 of the drawings, a detailed operation thereof will be commented on, as well as the duty and movement of each one of their parts.

As illustrated in said figure, the engine controls each one of its cylinders at a different time. Thus, the cylinder 15 is in a fuel intake and mixture compression phase; the cylinder 16 is in an explosion phase; the cylinder 17 is in an expansion phase, and the cylinder 18 is in an expulsion-exhaust phase. Start-up is initiated by means of the starting motor 2 (see Fig. 1), which drives the tiny crankshaft 1, which by means of the rods 6 transmits motion to the pistons for the start of the explosions. Once the engine has been started (now see Fig. 2), the explosion will be produced successively in each one of the cylinders. That is, unlike conventional engines in which the explosions are produced in alternate cylinders, in this case the explosions are produced in order of successive cylinders. In this manner, according to the position shown in Fig. 2, the first explosion is produced in the cylinder 16 whereby the gas pressure pushes, with similar force, both the piston 30 and the internal face of the head of such cylinder 16. At this time, the valve 25 is in locked position and the cylinder 16 subsequently held fast by means of the element 61 like a wedge.

The forces originated by the expansion of gases displaces the piston 30 the elbowed rod 33 of which rotates in respect of the pivotal point 35 and by means of its bending area pushes the connecting rod 39 so as to provoke the rotation of the tiny crankshaft 42 in the direction of the arrow B. Similarly, the pushing force on the head of the cylinder 16 causes rotation of the rotor 19 in the direction of the arrow A, driving all the elements secured to the same. Consequently, the piston 30 will start moving away from the head of the cylinder 16 and will start adopting the position shown for the cylinder 17 and piston 31, whereas the piston 29 is the one that will start compressing the air-fuel mixture contained inside the cylinder 15 to provoke the ensuing explosion. When the piston 30 reaches the position shown for the piston 32, the gas venting outlet 58 will then have been released and said gases will reach the corresponding duct towards the escape collector (designated by reference numeral 11 in Fig. 1). Since a sharp drop of its internal pressure is produced inside the cylinder 18, the pressurized air driven by the turbines will provoke the opening of the valve, against the action of the spring 54, and will penetrate inside said cylinder 18, even helping in venting the gases. With the return motion of the piston, the situation shown for the piston 29 cylinder 15 set will again be reached, so that once the position of the escape duct 55 has been surpassed by the piston, the inside pressure of the cylinder will be rapidly equalized with the pressure value existing in the rest of the engine, and the action of the spring 54 will provoke the locking of the corresponding valve 24, the valve locking further aided by the compression itself of the piston 29.

The cycle thus described will be produced in all and each one of the existing cylinders at each full turn of the crankshaft 42 in respect of the rotor 19, that is, provided that the crankshaft 42 again meets the rotor in a position identical to that depicted in the figure. However, it will be understood that since the rotor 19 is not fixed but, on the contrary, is provided with a rotating motion, each time that a full cycle is produced and, therefore, a new explosion in the cylinder 16 taken as reference, said cylinders and rotor may occupy different positions in the space, although the crankshaft 42 and the rotor 19 will keep, therebetween, the same relative position.

The rotation of the crankshaft 42 is complementary with the rotation of the rotor 19, so that said crankshaft 42 will rotate normally, at greater speed than the aforementioned rotor 19, and such that a reduction in the rotation speed of the rotor will provoke an increase in the rotation speed of the crankshaft. For a specific quantity of fuel-air mixture, the total number of explosions per time unit is maintained, so that if the rotor 19 is braked and retained, its speed will be absorbed by the tiny crankshaft 42.

The greater or lesser fuel feed to the cylinders is in function of the volume of the explosion chamber thereof. Thus, if it is desired to increase the number of revolutions, that is, revving up the engine, the elements 61 shaped like a wedge will be actuated, so that the cylinders 15 to 19 run back and, in this manner, increase the volume of the respective explosion chambers. The fuel feed increase, so as to provoke the expected acceleration, will be controlled by the position which said elements 61 occupy at each moment, and to this end the necessary means will be provided.

The rotation speed increase of the crankshaft 42, which in turn drives the turbines, will conjoin the air pressure increase driven by these towards the interior of the engine, and therefore the increase of air pressure penetrating the cylinders. However, when the pistons compress the fuel-air mixture, the compression ratio remains approximately constant since, although the air pressure supplied has a greater value, the explosion chamber of the cylinders is now also of greater volume.

As described in relation to Fig. 2, each elbowed rod 33 and its corresponding piston are then subjected to an alternate motion, pivoting in respect to their fixation points to the rotor 19. This allows the pistons to shift, following a trajectory curve parallel to the internal wall of the cylinders, thereby preventing the detrimental lurching that occurs in conventional engines. Undesirable stresses are thus eliminated on the segments 60 and are only subjected to the friction with the internal surface of the cylinder. This characteristic is satisfied irrespective of the position adopted by the cylinder, since the position change of each cylinder is carried out in respect to the same fixation point to the rotor in relation to which its corresponding piston pivots.

A longitudinal view, showing certain parts in section of the engine of the invention, has been illustrated in Fig. 3, according to the aforesaid embodiment in respect to Fig. 2. In this illustration are shown the cylinders arranged on two parallel planes 63 and 64, which are jointly attached to a single common rotor 62. The tiny crankshaft 42 is shown joined at the corresponding to sundry turbines 4, 5 which take charge of increasing the air pressure.

The short connecting rods 6 of both sets of cylinders, as shown therein, to two eccentric zones staggered in their positioning at 180° in respect of the crankshaft. Due to this, the explosions of the cylinders are produced simultaneously in twos, one on each plane, and in diametrically opposite positions. This drive mode provides the additional advantage that the vibrations of the explosions are of opposed directions and tend to deaden with each other.

As stated hereinabove, one same head will be preferably used for every two backed cylinders. This allows using one single control element for each pair of cylinders, which means a notable simplification as to construction and drive means and/or circuits. Each pair of cylinders will carry out the simultaneous pivoting around the shafts, such as the ones marked 81 and 82 in said Fig. 3.

As it will be easily understood, the increase in the number of cylinders does not pose any problem, since it will suffice by increasing the rotor diameter and by adding pairs of cylinders, logically the same number for each plane. Similarly, the number of planes may be increased with the object of producing the same power boosting effect, in which case one same head will be preferably used for all the backed or aligned cylinders, and one single control element associated to each head.

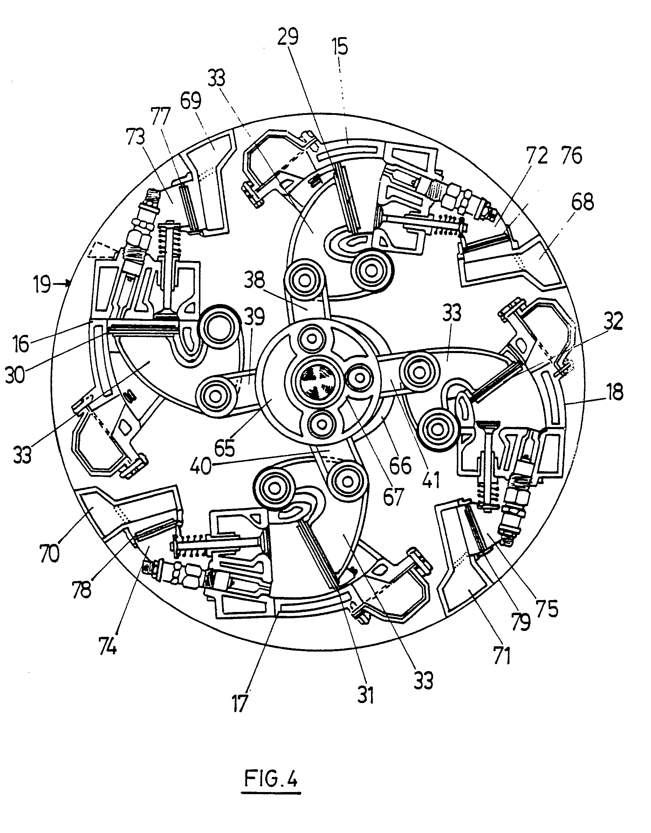

Another embodiment of the engine of the invention has been illustrated in Fig. 4 of the drawings. Shown therein, as in Fig. 2, are four cylinders 15 to 18, secured to a first flat rotor 19, provided with their respective pistons 29 to 32. Each piston is fastened to a rear bent rod 33, and in the bending areas of the aforesaid rods, one of the ends of the respective connecting rods 38 to 41 is jointed thereto. One of these connecting rods, for example the connecting rod 39 has its opposite end jointly secured to a central disc 65, whereas the opposite ends of the remaining connecting rods 38, 40, 41 are joined to the same central disc 65, with pivoting possibility. The said central disc 65 is jointly secured to an eccentric zone of the crankshaft 67, and in like manner, a second central disc 66 has been provided, correspondingly with the second flat rotor, fastened to an eccentric zone of the crankshaft 67, staggered from the previous one at 180°. As similarly illustrated in Fig. 2, the cylinders are provided with fuel injection means, pressurized air intake valves, cooling circuits, and are also pivotable in their positioning, pivoting in respect of the same tie points of the respective elbowed rods 33 to the rotor 19.

In this embodiment, when the engine is running, the action of the connecting rods 38 to 41 is carried out on the central line 65, which rotates and transmits its motion to the tiny crankshaft 67.

The arrangement illustrated in this figure permits simplifying the construction of the connecting rods 38 to 41, inasmuch as in this case these need not be provided with semicylindrical extensions 43 to 46 shown in Fig. 2. The fact that the connecting rod 39 is jointly fastened to the central disc 65 permits guiding perfectly the motion of said central disc for the explosion in the different cylinders.

In this embodiment of the present invention, the possibility has also been anticipated that the pressurized air penetrate towards the cylinders through the intake canalizations 68 to 71. Each one of these canalizations has an outlet mouth to which is adapted a respective duct 72 to 75, each one of these joined respectively to the head of each cylinder 15 to 18. The ducts 72 to 75 have sealing gaskets 76 to 79 which prevent the possible pressurized air leakages. This layout allows that the air feed towards the cylinders be equally effective irrespective of the position adopted by said cylinders, due to the displacement possibility of such duct 72 to 75 inside the respective outlet mouths of the pressurized air intake canalizations 68 to 71.

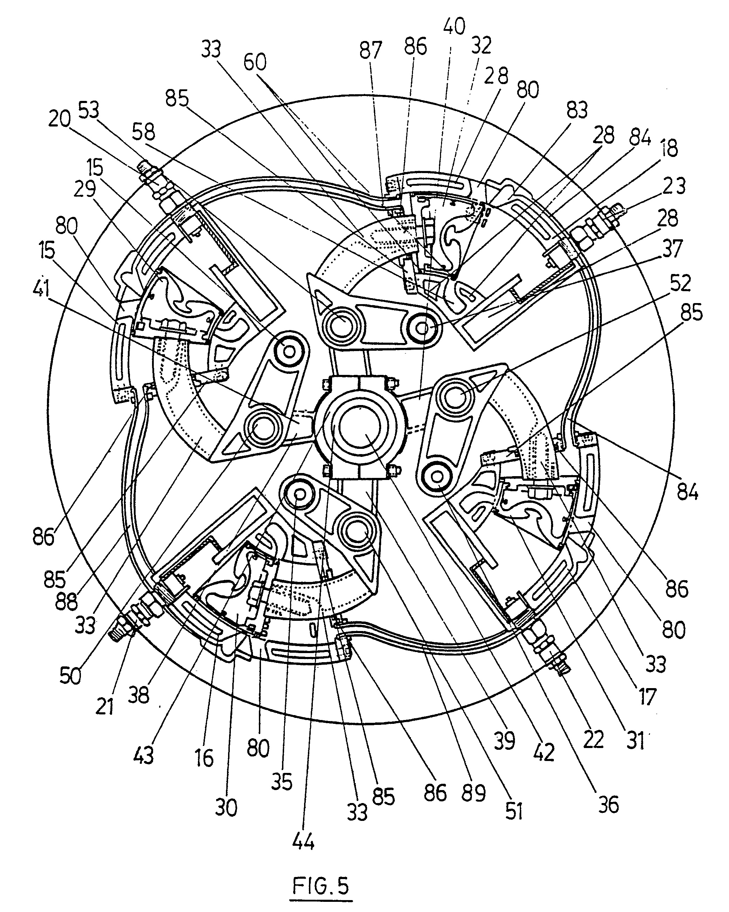

A preferred embodiment of the engine of the invention has been illustrated in Fig. 5, in which the cylinders are shown devoid of air intake valves. In said figure are shown, similarly as in Fig. 2, the cylinders 15 to 18 provided with their corresponding pistons 29 to 32, subsequently joined to elbowed rods 33. The cylinders 15 to 18 do not have, in this case, air intake valves, but rather that the wall of their respective bodies has been provided with passages or nozzles 80 through which the pressurized air driven by the turbines penetrates towards the interior of said cylinders.

With regard to, for example, the cylinder 18, it will be noted that the same is in the outlet phase. In a position diametrically opposite the air intake nozzle 80, is shown the outlet 58 of gas leakages and laterally to said nozzle 80, it is provided with a passage 83 transversal to the wall of the cylinder, which increases in volume outwardly and which continues with a duct 84 proceeding from the previous cylinder 17. The cylinder 18 (and also each one of the cylinders 15 to 17) has been provided with a plate or rear locking element 85, conveniently secured to the body of the cylinder, and through a central orifice cut in said locking element, protrudes the corresponding elbowed rod 33. Surrounding the bent rod 33 have been provided sealing gaskets 86, and from said locking element 85 starts a duct 87 which links the interior of this cylinder 18 with the interior of the rear cylinder 15. This layout is likewise verified for the rest of the cylinders.

The embodiment illustrated in Fig. 5 offers the advantage of obtaining an additional supercharging towards the interior of each cylinder, thereby increasing the compression values. In fact, when the mixture explosion is produced (in the figure, cylinder 16), the backward motion of the corresponding piston 30 is produced, so that said piston, due to the hermetic seal furnished by its segments 60, in respect of the wall of the cylinder, will push the air contained in the cylinder area comprised back of the rear wall of said piston so that once the segments have surpassed the position of the escape outlet 58 and also the position of the nozzle 80 of pressurized air intake proceeding from the turbines, the air pushed by the piston is compelled to come out through the duct 87 towards the explosion chamber of the cylinder 15. Since said cylinder 15 is in the compression phase, the action of the piston 32 shall be precisely increasing the air/fuel mixture compression inside the cylinder 15.

As shown herein, the piston 32 in its backward motion reaches, in the first place, the transversal passage 83 and then, in an approximately simultaneous manner, the nozzle 80 and the exhaust gas outlet 58. At the time they reach the outlet 83, the escape gases will tend, logically, to reach the duct 84. This effect diminishes due to the form provided for said transversal passage 83, inasmuch as in progressively increasing in volume, it constitutes an authentic expansion chamber at the initial instant in which said passage is released. On the other hand, since the piston, in its displacement, then immediately releases both the nozzle 80 and the gas outlet 58, the escape gases and the pressurized air that may penetrate through the nozzle 80 will rapidly reach the gas outlet 58, thereby causing a rapid depression inside the cylinder 18. The effect that the escape gases may have on the previous cylinder 17 through the transversal passage 83 and the duct 84 at this initial instant, is totally totally negligible, since the displacement time of the piston from the time it releases the transversal passage 83 up to the time it releases the gas outlet 58 is, at idle rating, about one hundredth of a second.

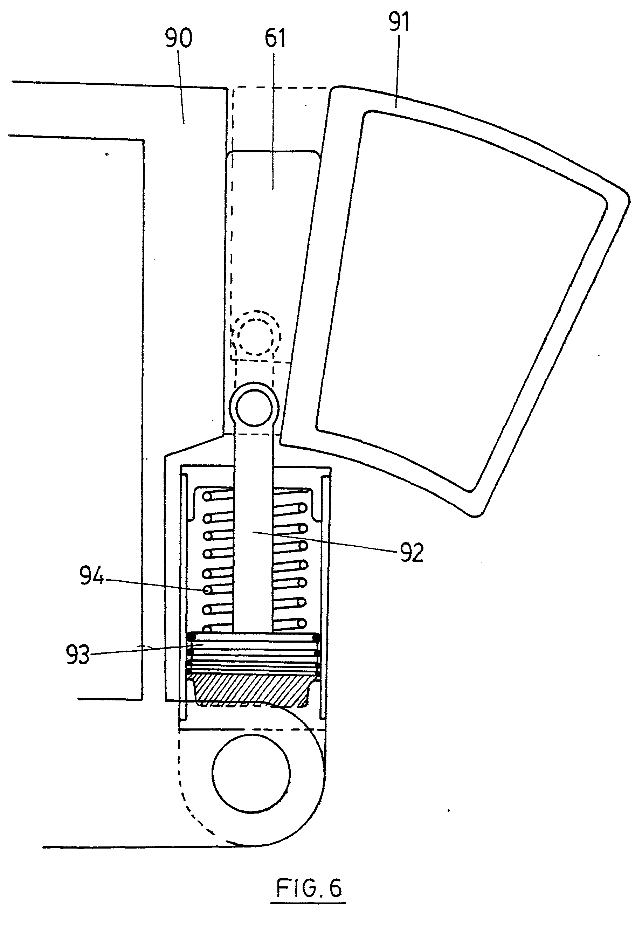

Illustrated in Fig. 6 is a schematized view of an adaptation form of the control element, shaped like a wedge, to the head of the cylinders. In said figure is shown the wedge 61 supported by one of its side edges against the head 90 of any pair of cylinders and on its opposite edge against a pressurized air intake collector 91. In accordance with a preferred embodiment of the present invention, the wedge 61 is joined at its end to a tiny rod 92 which, at its opposite end, is secured to the plunger 93 of a hydraulic actuator operated from the outside. Said plunger 93 actuates against the action of a spring 94.

As mentioned in the foregoing, the duty of the wedge 61 is to allow the cylinders of the engine to adopt different positions in order to incrase or decrease, at will, the volume of the combustion chambers of said cylinders, and to provoke along with it the increase or decrease, respectively, of the number of revolutions of the engine. This action takes place when pressure is exerted from the outside on the plunger 93 of the hydraulic pump, thereby said plunger 93 is axially displaced, thereby compressing the spring 94 and likewise displacing the wedge 61 outwardly. Since said wedge 61 has an approximately trapezoidal shape, with its lesser side facing the hydraulic pump, the outwardly displacement of the wedge 61 will allow the back motion of the wedge 90 from the corresponding pair of cylinders (position shown with dotted line). Then the action of said pressure ceases, the spring recovery returns the wedge 61 to its home position, pushing the head 90 and the cylinders adopting the minimum volume position of their combustion chamber.

As deduced from the above, the explosion engine of the present invention has great simplicity and reduced sizes. On the other hand, due to the short run of the pistons and the great compression originated in the cylinders, these permit the building up of momentary temperatures higher than those of conventional engines, so that it can be used with low heat power fuels, thereby offering a maximum operation at any speed and power rating. Furthermore, unlike the hitherto known engines, the load curve of the engine of the present invention approximates a descending grade line, whereby the fuel expense is a dierct function of the work to be performed at each given time.

The engine of the present invention may also be used with other types of fuel, in which case only minor modifications can be effected in the same, such as providing each cylinder with its corresponding spark plug in the known manner.

The field of application of the engine of the invention is vast, inasmuch as the same is capable of replacing with great success and reduced fuel consumption the conventional engine, such as, for example, in automobiles, heavy tonnage trucks, locomotives, ships, actuation of generators, etc.

## Claims

1. Explosion—type engine comprising at least one rotor (19, 62) supporting at least one pair of cylinders (15 16, 17, 18) secured to said rotor (19, 62) by means of side extensions from their own body to vary the volume of respective chambers, said cylinders (15, 16, 17, 18) having an arched longitudinal form with an adequate piston (29, 30, 31, 32) housed therein and an elbowed rod (33) pivotally secured to the rotor (19, 62) at the same point as its associated cylinder (15, 16, 17, 18), the bending area of each piston rod (33) being jointed at the end of a short connecting rod (38, 39, 40, 41) acting at its opposite end on an eccentric zone of a tiny crankshaft (42), said rotor (19, 62) taking charge of transmitting its movement to a driving shaft (9) or load drive shaft, different pairs of cylinders (15, 16, 17, 18) being arranged on at least two parallel planes (63, 64) characterized in, that the cylinders (15, 16, 17, 18) are pivotally secured to said rotor (19, 62) at the pivoting point (34, 35, 36, 37) of the corresponding piston rod (33), that said cylinders (15, 16, 17, 18) have in their head area fuel injectors and/or sparking plugs (20, 21, 22, 23) and coolant canalizations (28), that there is cut in the wall of the body of each cylinder (15, 16, 17, 18) at least one transversal duct (55—50) in a convenient position for the expulsion of escape gases towards a collector chamber (11) thereof, and that said crankshaft (42) is located in the centre of the engine and is moved by said different short connecting rods (38, 39, 40, 41), said crankshaft (42) driving at one of its ends at least one rotating compressor (4, 5) for introducing pressurized air towards the interior of the engine, and it is opposite end the pumps of the fuel injectors (20, 21, 22, 23) of lubricating oil and coolant or air.

2. Engine according to claim 1, characterized by a common head for each set of adjacent cylinders (63, 64) on different planes.

3. Engine according to claim 1 or 2, characterized in that said short connecting rods (38, 39, 40, 41) respectively comprise a semi-cylindrical transversal extension (43, 45; 44, 46) for their adaptation to the eccentric zone of the tiny crankshaft (42).

4. Engine according to claim 1 or 2, characterized in that said short connecting rods (38, 39, 40, 41) are joint to a central disc (65) connected to an eccentric zone of the crankshaft (67).

5. Engine according to one of claims 1—4, characterized in that the pressurized air driven by at least one of said turbines (4, 5) is introduced in the cylinders (15, 16, 17, 18) through valves (24, 25, 26, 27) provided in the head of each cylinder (15, 16, 17, 18), counteracting the action of a spring (54) associated to each valve (24, 25, 26, 27) once the internal pressure of the corresponding cylinder (15, 16, 17, 18) has been reduced through expulsion of the escape gases, said valve (24, 25, 26, 27) returning to its locking position by aid of said spring (54), once the internal and external pressures of the cylinder (15, 16, 17, 18) have been equalized.

6. Engine according to one of claims 1—4, characterized in that each cylinder (15, 16, 17, 18) is provided in its wall with sundry openings (80, 83), one of these being used as inlet passage (80) of the pressurized air from at least one of said turbines (4, 5) and the other (83), which widens outwardly, is in contact with the preceding cylinder by means of an appropriate duct (84, 87).

7. Engine according to claim 6, characterized in that the cylinders (15, 16, 17, 18) are hermetically sealed at their part opposite of the cylinder head by means of an adequate plate (85) provided with an orifice through which emerges the corresponding piston rod (33), and being provided with a second orifice of lesser diameter in said plate (85), from which protrudes the duct (84, 87), linking the corresponding opening of the rear cylinder, so that with the backward motion of the piston (29, 30, 31, 32) a superpressure will be applied to the chamber of the aforesaid rear cylinder.

8. Engine according to one of the claims 1—7, characterized in that the position of each pair of backed cylinders (15, 16, 17, 18) is determined by the position of a control element shaped like a wedge (61) acting on the rear wall of the corresponding head (90).

9. Engine according to one of claims 1—8, characterized in that the part followed by each piston (29, 30, 31, 32) in its alternate motion is perfectly parallel to the internal wall of its associated cylinder (15, 16, 17, 18).

10. Engine according to one of claims 1—9, characterized in that the rotor (19, 62) and the tiny crankshaft (42) rotate in the same direction at different speeds.

11. Engine according to one of claims 1—10, characterized in that the rotor (19, 62) is provided with pressurized air intake canalizations (68, 69, 70, 71) each leading towards a cylinder (15, 16, 17, 18), at th outlet mouth of which is housed a duct (72, 73, 74, 75), which is connected to its respective cylinder (15, 16, 17, 18) and is displaceable together with that cylinder (15, 16, 17, 18).

12. Engine according to one of claims 1—11, characterized in that each piston (29, 30, 31, 32) includes a front layer (59) of refractory material.

**Patentansprüche**

1. Explosionsmotor mit mindestens einem Rotor (19, 62), der mindestens ein Paar von Zylindern (15, 16, 17, 18) trägt, die mit diesem Rotor (19, 62) mit Hilfe von seitlichen Erweiterungen ihres eigenen Körpers verbunden sind, um das Volumen der jeweiligen Kammern zu variieren, wobei die genannten Zylinder (15, 16, 17, 18) eine bogenförmige, gestreckte Form mit einem darin untergebrachten, passenden Kolben (29, 30, 31, 32) und eine ellenbogenförmige Stange (33) aufweisen, die am gleichen Punkt wie ihr dazugehöriger Zylinder (15, 16, 17, 18) mit dem genannten Rotor (19, 62) drehbar verbunden ist, wobei der sich biegende Bereich jeder Kolbenstange (33) am Ende einer kurzen Pleuelstange (38, 39, 40, 41) angelenkt ist, die an ihrem entgegengesetzten Ende auf einen exzentrischen Bereich einer winzigen Kurbelwelle (42) wirkt, wobei der genannte Rotor (19, 62) seine Bewegung auf eine Antriebswelle (9) oder Lastantriebswelle überträgt und verschiedene Paare von Zylindern (15, 16, 17, 18) auf mindestens zwei parallelen Ebenen (63, 64) angeordnet sind, dadurch gekennzeichnet, daß die Zylinder (15, 16, 17, 18) am Drehpunkt (34, 35, 36, 37) der entsprechenden Kolbenstange (33) drehbar mit dem genannten Rotor (19, 62) verbunden sind, daß die genannten Zylinder (15, 16, 17, 18) in ihrem Kopfbereich Brennstoffeinspritzdüsen und/oder Zündkerzen (20, 21, 22, 23) und Kühlmittelkanäle (28) aufweisen, daß in der Wand des Körpers jedes Zylinders (15, 16, 17, 18) mindestens eine Querleitung in einer für den Ausstoß von Auspuffgasen in eine dafür vorgesehene Sammelkammer (11) zweckmäßigen Lage angeordnet ist, daß die genannte Kurbelwelle (42) im Mittelpunkt des Motors liegt und durch die genannten verschiedenen kurzen Pleuelstangen (38, 39, 40, 41) bewegt wird, wobei die genannte Kurbelwelle (42) an einem ihrer Enden mindestens einen rotierenden Kompressor (4, 5) für die Einführung von Druckluft in den Innenbereich des Motors und an ihrem entgegengesetzten Ende die Pumpen der Einspritzdüsen (20, 21, 22, 23) für Schmieröl und Kühlmittel oder Luft aufweist.

2. Motor nach Anspruch 1, gekennzeichnet durch einen gemeinsamen Kopf für jede Gruppe von nebeneinanderliegenden Zylindern (63, 64) auf verschiedenen Ebenen.

3. Motor nach Anspruch 1 oder 2, dadurch gekennzeichnet, daß die genannten kurzen Pleuelstangen (38, 39, 40, 41) jeweils eine halbzylindrische Quererweiterung (43, 45, 44, 46) zwecke Anpassung an die exzentrischen Bereiche der winzigen Kurbelwelle (42) aufweisen.

4. Motor nach Anspruch 1 oder 2, dadurch gekennzeichnet, daß die kurzen Pleuelstangen (38, 39, 40, 41) mit einer zentralen, mit einer exzentrischen Zone der Kurbelwelle (67) verbundenen Scheibe (65) verbunden sind.

5. Motor nach Anspruch 1 bis 4, dadurch gekennzeichnet, daß die durch mindestens eine der genannten Turbinen (4, 5) angetriebene Druckluft in die Zylinder (15, 16, 17, 18) durch Ventile (24, 25, 26, 27) eingeführt werden, die im Kopf von jedem Zylinder (15, 16, 17, 18) vorgesehen sind, was gegen die Wirkung einer Feder (54) erfolgt, die mit jedem Ventil (24, 25, 26, 27) verbunden ist, wenn der Innendruck des entsprechenden Zylinders (15, 16, 17, 18) durch das Ausstossen der Auspuffgase reduziert wurde, wobei das genannte Ventil (24, 25, 26, 27) mit Hilfe der genannten Feder (54) in seine Blockierposition zurückkehrt, nachdem sich der Innen- und der Außendruck des Zylinders (15, 16, 17, 18) angeglichen haben.

6. Motor nach Anspruch 1 bis 4, dadurch gekennzeichnet, daß jeder Zylinder (15, 16, 17, 18) an seiner Wand mit diversen Öffnungen (80, 83) versehen ist, wobei eine von diesen als Einlaß (80) der Druckluft aus mindestens einer der genannten Turbinen (4, 5) verwendet wird, und die andere (83), die sich nach außen hin erweitert, mittels einer entsprechenden Leitung (84, 87) mit dem vorangegangenen Zylinder in Verbindung ist.

7. Motor nach Anspruch 6, dadurch gekennzeichnet, daß die Zylinder (15, 16, 17, 18) an der dem Zylinderkopf gegenüberliegenden Seite befindet, durch eine passende Platte (85) mit einer Öffnung, durch die die entsprechende Kolbenstange (33) hindurchtritt, hermetisch abgedichtet werden, in der genannten Platte (85) eine zweite Öffnung mit geringerem Durchmesser vorgesehen ist, aus der die Leitung (84, 87) hervortritt, die eine Verbindung zur entsprechenden Öffnung des rückwärtigen Zylinders herstellt, so daß auf die Kammer des vorgenannten rückwärtigen Zylinders mit der Rückwärtsbewegung des Kolbens (29, 30, 31, 32) ein Überdruck angelegt wird.

8. Motor nach Anspruch 1 bis 7, dadurch gekennzeichnet, daß die Lage jedes Paares von rückwärtigen Zylindern (15, 16, 17, 18) durch die Position eines Steuerelementes bestimmt wird, das die Form eines Keils (61) hat, der auf die rückwärtige Wand des entsprechenden Kopfes (90) wirkt.

9. Motor nach Anspruch 1 bis 8, dadurch gekennzeichnet, daß der Weg, den jeweils ein Kolben (29, 30, 31, 32) in seiner alternierenden Bewegung einhält, zur Innenwand des dazugehörigen Zylinders (15, 16, 17, 18) perfekt parallel ist.

10. Motor nach Anspruch 1 bis 8, dadurch gekennzeichnet, daß der Rotor (19, 62) und die winzige Kurbelwelle (42) mit verschiedenen Geschwindigkeiten in der gleichen Richtung rotieren.

11. Motor nach Anspruch 1 bis 10, dadurch gekennzeichnet, daß der Rotor (19, 62) mit Druckluftaufnahmeleitungen (68, 69, 70, 71) versehen ist, die jeweils zu einem Zylinder (15, 16, 17, 18) führen, an deren Auslaßmündung jeweils eine Leitung (72, 73, 74, 75) untergebracht ist, die mit dem dazugehörigen Zylinder (15, 16, 17, 18) verbunden ist und zusammen mit dem Zylinder (15, 16, 17, 18) bewegt werden kann.

12. Motor nach Anspruch 1 bis 11, dadurch gekennzeichnet, daß jeder Kolben (29, 30, 31, 32) vorne eine Schicht (59) aus feuerfestem Material aufweist.

**Revendications**

1. Moteur à combustion interne comportant au moins un rotor (19, 62) supportant au moins une paire de cylindres (15, 16, 17, 18) fixée audit rotor (19, 62) au moyen d'extensions latérales de leur propre corps pour varier le volume des chambres qui leur correspondent, lesdits cylindres (15, 16, 17, 18) ayant une forme arquée longitudinale avec un piston adapté (29, 30, 31, 32) logé dans cette forme et une barre coudée (33) qui est fixée au rotor (19, 62) de manière à pouvoir pivoter au même point que le cylindre qui y est associé (15, 16, 17, 18), la zone de courbure de chaque barre de piston (33) étant articulée à l'extrémité d'une bielle courte (38, 39, 40, 41) agissant en son extrémité opposée sur une zone excentrique d'un minuscule vilebrequin (42), ledit rotor (19, 62) étant. chargé de transmettre son mouvement à l'arbre de direction (9) ou l'arbre d'entraînement de la charge, différentes paires de cylindres (15, 16, 17, 18) étant agencées sur au moins deux plans parallèles (63, 64), caractérisé en ce que

les cylindres (15, 16, 17, 18) sont fixés de manière à pivoter sur ledit rotor (19, 62) au point de pivotement (34, 35, 36, 37) de la barre de piston correspondante (33), que lesdits cylindres (15, 16, 17, 18) possédent en leur zone de tête des injecteurs de carburant et/ou des bougies d'allumage (20, 21, 22, 23) et des canalisations de liquide de refroidissement (28), que dans la parci du corps de chaque cylindre (15, 16, 17, 18) au moins une conduite transversale (55) est découpée en une position adaptée pour l'expulsion des gaz d'échappement vers une chambre collectrice (11) des cylindres, et que ledit vilebrequin (42) est logé au centre du moteur et est mis en mouvement par différentes bielles courtes (38, 39, 40, 41), ledit vilebrequin (42) entraînant à l'une de ses extrémités au moins un compresseur rotatif (4, 5) pour introduire de l'air sous pression vers l'intérieur du moteur et, à son extrémité opposée, les pompes des injecteurs de carburant (20, 21, 22, 23), d'huile de lubrification et de liquide de refroidissement ou d'air.

2. Moteur selon la revendication 1, caractérisé par l'existence d'une tête commune pour chaque groupe de cylindres adjacents (63, 64) sur les différents plans.

3. Moteur selon les revendications 1 ou 2, caractérisé en ce que lesdites courtes bielles (38, 39, 40, 41) comportent respectivement des extensions transversales semi-cylindriques (43, 45; 44, 46) pour l'adaptation aux zones excentriques de vilebreguin (42) minuscule.

4. Moteur selon les revendications 1 ou 2, caractérisé en ce que lesdites courtes bielles (38, 39, 40, 41) sont articulées sur un disque central (65) raccordé à une zone excentrique du vilebrequin (67).

5. Moteur selon l'une des revendications 1 à 4, caractérisé en ce que l'air sous pression entraîné par au moins une desdites turbines (4, 5) est introduit dans les cylindres (15, 16, 17, 18) par des valves (24, 25, 26, 27) prévues dans la tête de chaque cylindre (15, 16, 17, 18) et contrecarrant l'action d'un ressort (54) associé à chaque valve (24, 25, 26, 27) une fois que la pression interne du cylindre correspondant (15, 16, 17, 18) a été réduite par l'expulsion des gaz d'échappement, ladite valve (24, 25, 26, 27) retournant en sa position de verrouillage à l'aide dudit ressort (54) une fois que les pressions intérieures et extérieures du cylindre (15, 16, 17, 18) ont été égalisées.

6. Moteur selon l'une des revendications 1 à 4, caractérisé en ce que chaque cylindre (15, 16, 17, 18) est pourvu en sa paroi de diverses ouvertures (80, 83) dont l'une est utilisée comme passage d'admission (80) de l'air sous pression à partir d'au moins une desdites turbines (4, 5) et que l'ature (83), qui s'évase vers l'extérieur, est en contact avec le cylindre précédent au moyen d'une conduite appropriée (84, 87).

7. Moteur selon la revendication 6, caractérisé en ce que les cylindres (15, 16, 17, 18) sont hermétiquement scellés en leur partie opposée à la tête de cylindre au moyen d'une plaque adaptée (85) qui est pourvue d'un orifice à travers lequel émerge la barre de piston correspondante (33) et d'un second orifice de diamètre inférieur dans ladite plaque (85) d'où sort la conduite (84, 87) reliant l'ouverture correspondante du cylindre arrière de sorte que lorsque le piston (29, 30, 31, 32) fait un mouvement arrière, une superpression est appliquée à la chambre du piston arrière mentionné ci-dessus.

8. Moteur selon l'une des revendications 1 à 7, caractérisé en ce que la position de chaque paire de cylindres arrière (15, 16, 17, 18) est déterminée par la position d'un élément de commande ayant la forme d'un coin (61) agissant sur la paroi arrière de la tête (90) correspondante.

9. Moteur selon l'une des revendications 1 à 8, caractérisé en ce que la course effectuée par chaque piston (29, 30, 31, 32) dans son mouvement alternant est parfaitement parallèle à la paroi intérieure du cylindre associé (15, 16, 17, 18).

10. Moteur selon l'une des revendication 1 à 9, caractérisé en ce que le rotor (19, 62) et le minuscule vilebrequin (42) tournent dans la même direction à des vitesses différentes.

11. Moteur selon l'une des revendications 1 à 10, caractérisé en ce que le rotor (19, 62) est pourvu de canalisations (68, 69, 70, 71) d'amenée d'air sous pression, chacune de ces canalisations aboutissant à un cylindre (15, 16, 17, 18) à la bouche de sortie duquel est logée une conduite (72, 73, 74, 75) qui est raccordée à son cylindre respectif (15, 16, 17, 18) et peut se déplacer avec le cylindre (15, 16, 17, 18).

12. Moteur selon l'une des revendications 1 à 11, caractérisé en ce que chaque piston (29, 30, 31, 32) comporte une couche (59) avant de matériau réfractaire.

9

FIG.1

FIG. 2

FIG.3

FIG.4

4

EP 0 126 236 B1

FIG.5

5

FIG.6